Europäisches Patentamt

(19) European Patent Office                    (11) Publication number: **0 136 734**

Office européen des brevets                                                    **A2**

(12)                    **EUROPEAN PATENT APPLICATION**

(21) Application number: **84201105.8**              (51) Int. Cl.⁴: **A 01 B 49/02**
                                                              **A 01 B 71/00**
(22) Date of filing: **28.05.82**

(30) Priority: **29.05.81 NL 8102623**              (71) Applicant: **C. van der Lely N.V.**
                                                  **Weverskade 10 P.O. Box 26**
                                                  **NL-3155 ZG Maasland(NL)**

(43) Date of publication of application:
**10.04.85 Bulletin 85/15**                       (72) Inventor: **van der Lely, Cornelis**
                                                  **7, Brüschenrain**
(84) Designated Contracting States:                 **ZUG(CH)**
**CH DE FR GB IT LI**
                                                  (74) Representative: **Mulder, Herman et al,**
(60) Publication number of the earlier application   **Octrooibureau Van der Lely N.V. Weverskade 10 P.O. Box**
in accordance with Art. 76 EPC: **0 066 344**     **26**
                                                  **NL-3155 ZG Maasland(NL)**

(54) **Soil cultivating implement.**

㊼ In a soil cultivating implement, which comprises a plurality of soil working members (4) and a ground roller (18) that is bodily movable upwardly and downwardly relative to said soil working members (4) to control the soil working depth thereof, a dial (34) is provided for visually setting the bodily level of the roller (18) relative to that of the soil working members (4). The dial (34) is positioned so as to be visible from the driving seat of the tractor, which tractor is able to move and operate the implement during the use thereof. The ground roller (18) - by means of an upright support (10) and an arm (13) or part of a roller support - is movable upwardly and downwardly, whereby the dial (34) is arranged on one of the upright supports (10) and the arm (13) of the roller support is movable upwardly and downwardly alongside the dial to function as a pointer in cooperation therewith.

EP 0 136 734 A2

./...

Croydon Printing Company Ltd.

Fig. 1

C. van der Lely N.V., Maasland, Holland.

**0136734**

"Soil cultivating implement"

The invention relates to a soil cultvating implement comprising a plurality of soil working members and a ground roller that is bodily movable upwardly and downwardly relative to said soil working members to control the        soil working depth thereof.

With implements of this kind as for instance known from the French patent 1,594,692 it is not always easy to get an exact adjustment of the roller, i.e. in such a way that the roller after its adjustment has the desired horizontal position.

The invention now has for its object to overcome this disadvantage and in accordance with the invention there is provided a dial for visually setting the bodily level of the roller relative to that of the soil working members, said dial being so positioned as to be visible from the driving seat of a tractor which is able to move and operate the implement during the use thereof.

By means of this provision the adjustment of the roller can be performed without difficulties and even from the driving seat of a tractor.

For a better understanding of the invention and to show how the same may be carried into effect, reference will now be made, by way of example, to the accompanying drawings, in which :

Figure 1 is a plan view of a soil cultivating implement in the form of a rotary harrow constructed in accordance with the invention shown connected to the rear of an agricultural tractor,

Figure 2 is a side elevation corresponding to Fig. 1,

Figure 3 is section,. to an enlarged scale, taken on the line III – III in Figure 1,

Figure 4 is an elevation as seen in the direction indicated by an arrow IV in figure 3,

Figure 5 corresponds to Fig. 2, partially, but illustrates the use of an alternative from of adjustment indicator,and

Figure 6 partially corresponds to Fig. 2 and to Fig. 5 but illustrates an alternative fluid-pressure operated adjustment mechanism.

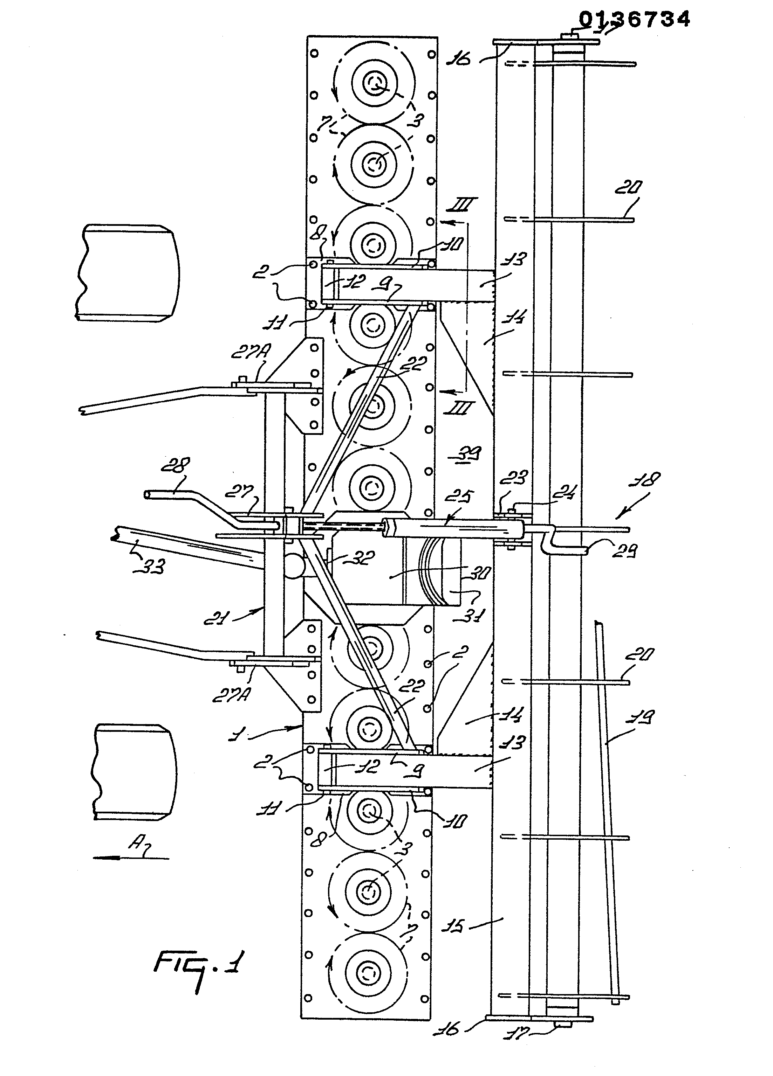

Referring firstly to Figures 1 to 4 inclusive of the accompanying drawings, the soil cultivating imple-.ment that is illustrated therein is in the form of a rotary harrow and comprises a hollow box-section frame portion 1 of elongate configuration that extends substantially horizontally transverse and usually, as illustrated, substantially horizontally perpendicular to the intended direction of operative travel of the implement that is indicated in Figures 1 and 2 of the drawings by an arrow A. The hollow frame portion 1 takes the form of an assembly of plates that includes a lower substantially channel-shaped plate having horizontal flanges to which an upper planar and substantially horizontally disposed cover plate is firmly but releasably secured by a plurality of substantially regularly spaced apart and substantially vertically disposed bolts 2. A plurality, of which there are twelve in the example that is being described, of upwardly extending shafts 3 are rotatably journalled in bearings carried by the upper and lower walls of the frame portion 1 in such a way that their axes of rotation are contained in a single plane that is parallel to the transverse length of the frame portion 1 with the parallel axes of rotation regularly spaced apart from one another in said plane by distances which advantageously, but not essentially, have magnitudes of substantially 25 centimetres In the embodiment which is being described, each shaft 3 is vertically or substantially vertically disposed. The lowermost end of each shaft 3 projects downwardly from beneath the bottom of the hollow frame portion 1 and there has the hub of a corresponding rotary soil working member 4 firmly but releasably secured to it in such a way that each member 4 cannot move either rotatably or axially relative to the shaft 3 concerned. Each rotary soil working member 4 comprises a substantially horizontally disposed carrier 5 at the opposite ends of which are rigidly or integrally mounted two sleeve-like holders in which upper fastening portions of rigid cultivating members in the form of tines 6 are firmly but releasably secured. Each shaft 3 is provided, inside the hollow frame portion 1, with a corresponding straight-toothed or spur-toothed pinion 7 , the sizes of the twelve (in this embodiment) pinions 7 being such that, as diagrammatically illustrated in Figure 1 of the drawings, the teeth of each pinion 7 are in driven and/or driving and driven mesh with those of the or each immediately neighbouring pinion in the single row thereof that is contained within the hollow frame portion 1. It will be seen that, with this arrangement, each pinion 7, together with the corresponding shaft 3 and rotary soil member 4, will revolve, during the operation of the implement, in a direction which is opposite to the direction of rotation of the or each immediately neighbouring similar assembly, small arrows in Figure 1 of the drawings indicating the directions of operative rotation.

The opposite ends of the hollow frame portion 1 are closed by simple upright plates 40 (Figure 2) of inverted trapeziform shape and, at two locations which are substantially one quarter of the distance from one end of the frame portion 1 towards the opposite end thereof, two substantially horizontally displaced plates 8 are mounted on top of the cover plate of the hollow frame portion 1, the two plates 8 being secured to the hollow frame portion 1 by appropriately positioned ones of the bolts 2 that secure the cover plate of the frame portion 1 to the underlying substantially channel-shaped part thereof. As seen in plan view (Figure 1), the two plates 8 are located midway between the shafts 3 that correspond to the third and fourth rotary soil working members 4 along the single row thereof counting from corresponding ends of that row.

Each substantially horizontal plate 8 is provided, adjacent to the opposite edges thereof that extend parallel or substantially parallel to the direction A, with inner and outer (with respect to the centre of the frame portion 1) upright supports 9 and 10 that are substantially vertically parallel to one another and to the direction A and that extend throughout most, but not all, of the lengths of the hollow frame portion 1 as measured in the direction A. It will be seen from the drawings that, whilst the upper and lower edges of the two inner supports 9 are substan- tially horizontally parallel to one another, the upper edge of each outer support 10 is downwardly and forwardly inclined from rear to front with respect to the direction A. As seen in plan view (Figure 1), a strong horizontal pivot pin 11 interconnects the leading ends of the two inner and outer upright supports 9 and 10 of each pair and extends substantially parallel to the transverse length of the horizontal frame portion 1 at a location above and towards the front of that frame portion 1 with respect to the direction A. Each of the two substantially coaxial pivot pins 11 is surrounded, between the corresponding pair of supports 9 and 10, by a horizontal sleeve 12 to which is secured the leading end of a rearwardly extending arm 13 which is in the form of a hollow beam of rectangular, and preferably square, cross section, said beam thus being of a construction that is resistant to torsional deformation. The rearmost ends of the two arms 13, which are behind the hollow frame portion 1 with respect to the direction A, are coupled to a carrier 15 of hollow formation and square cross section (see Figure 2) by means which includes upper and lower pairs of parallel strengthening plates 14. As can be seen in the drawings , the two upper and lower strengthening plates 14 of each pair are located at the inner and relatively facing sides of the two arms 13. The formation of the carrier 15 is such that said carrier has a strong resistance to torsional deformation, it being possible for it to have a rectangular, rather than strictly square, cross section, if preferred. The carrier 15 has substantially the same length in a horizontal direction that is perpendicular to the direc- tion A as does the hollow frame portion 1 and its opposite ends substantially register in the direction A, with the opposite ends of the frame portion.

The free ends of the carrier 15 carry downwardly and rearwardly, with respect to the direction A, support plates 16 (Figures 1 and 2), each support plate 16 being substantially rectangular as seen in side elevation (Fig. 2). A ground roller 18 is mounted in a freely rotatable manner between substantially horizontal bearings carried at the rearmost and lowermost ends of the two support plates 16, stub shafts 17 at the opposite ends of the roller 18 being arranged to co-operate rotatably with said bearings. The ground roller 18 comprises a central axially extending shaft to which a plurality such as seven, of circular support plates 20 are secured at regularly spaced part intervals which are such that one of said support plates 20 is located close to each opposite end of the roller 18. Each circular support plate 20 is formed, close to its edge, with a plurality such as ten, of regularly spaced apart holes through which elongate elements 19 of tubular or rod formation are entered in such a way as, preferably, to extend helically around the axis of rotation of the ground roller 18. The elongate elements 19 are releasable from the roller 18 and the maximum possible number, or a reduced number, thereof may be employed having regard to the nature and condition of the soil that is to be dealt with by the implement.

Brackets that are secured to the top and front of the hollow frame portion 1, with respect to the direction A, secure a coupling member or trestle 21 to that frame portion 1 at a location midway between the opposite lateral sides or ends thereof, said coupling member or trestle 21 being of generally triangular configuration as seen in front or rear elevation. Tie beams 22 interconnect plates at the apex of the coupling member or trestle 21 and the two inner upright supports 9. The plates at the apex of the coupling member or trestle 21 include apertured lugs 27 arranged to co-operate pivotally with the upper lifting link of a three- point lifting device or hitch carried by an agricultural tractor or other operating vehicle of the

0136734

implement. Lower portions of the coupling member or trestle 21 carry forwardly projecting lugs 27A to which the two lower lifting links of the same three-point lifting device or hitch can be connected in the generally known manner that is illustrated in outline in Figures 1 and 2 of the drawings employing substantially horizontally aligned pivot pins.

Two horizontally spaced apart lugs 23 project substantially vertically upwards in parallel relationship with one another at a location midway along the transverse length of the upper surface of the beam which affords the carrier 15. Substantially horizontally aligned trunnion pins 24 turnably mount an adjustment mechanism 25 between the upper ends of the two lugs 23. The adjusting mechanism 25 is of a basically known kind which incorporates a screw-threaded rod which can be rotated in a matchingly screw-threaded part of a cylinder to increase, or decrease, the effective lengths of the mechanism 25, as may be reqyired. In this case, however, the screw-threaded rod of the mechanism 25 projects from both opposite axial ends of the cylinder and is provided, at those ends, with corresponding upper and lower crank handles 28 and 29. An upper non-threaded portion of the screw-threaded rod passes between the lugs 27 at the top of the coupling member or trestle 21, a block being arranged around said portion of the rod at this point by way of a plain internal bore through which the rod is entered. The block is turnably connected to the two lugs 27 by a pair of horizontally aligned trunnion pins 26 and means are arranged so that the rod of the adjustment mechanism 25 can rotate freely in the block but cannot move axially relative thereto to any significant extent. It will be apparent that the rod of the mechanism 25 can be rotated from either end by adjusting the upper crank handle 28 or the lower crank handle 29, the upper crank handle 28 being adjacent to the upper coupling point of the coupling member or trestle 21 and almost always being accessible from the driving seat of an agricultural tractor that is used to move and operate the implement without the driver of that tractor actually having to leave his/her seat. The lower crank handle 29 is disposed substantially vertically above the ground roller 18 and can conveniently be manipulated by an operator standing on the ground immediately to the rear of the centre of the implement. It will be apparent that rotating the rod of the adjustment mechanism 25 in an appropriate direction will either increase or decrease the distance between the pair of trunnion pins 24 and the pair of trunnion pins 26. This change in the effective length of the mechanism 25 can only be accomodated by turning the arms 13, the carrier 15 and the roller 18 upwardly or downwardly about the substantially horizonatally aligned pivot pins 11. If the roller 18 is moved upwardly relative to the frame portion 1 and rotary soil working members 4, then the tines 6 of those members 4 will be able to penetrate more deeply into the ground during the operation of the implement and, conversely, if the roller 18 is lowered relative to the frame portion 1 and soil working members 4, the maximum depth of penetration of the tines 6 into the soil which is possible will be reduced. It is noted that, as seen in Figure 2 of the drawings, the roller 18 is shown turned downwardly about the aligned pivot pins 11 to the maximum possible extent in which position of adjustment the lower faces of the arms 13 are in contact with the upper surfaces of the plates 8 on the hollow frame portion 1.

One of the centre pair of rotary shafts 3 in the single row of those shafts is extended upwardly through the cover plate of the hollow frame portion 1 into a gear box 30 that is mounted on top of the hollow frame portion 1. A shaft and bevel pinion transmission within the gear box 30 places the upward extension of said shaft 3 in driven connection with a horizontally disposed rotary input shaft 32 of the gear box 30 that projects forwardly from the front of the gear box 30 in a horizontal direction that is parallel or substantially parallel to the direction A. The rotary input shaft 32 and an underlying parallel shaft that is not visible in the drawings have rearmost ends which project into a change-speed gear 31 that is mounted at the back of the gear box 30 with respect to the direction A. The ends of these two shafts are splined and co-operate with the matching internally splined hubs of pairs of toothed pinions of different sizes. The transmission ratio between the two shafts in the gear box 30, and thus the speed at which the soil working members 4 will be rotated in response to a substantially fixed speed of driving rotation that is applied to the leading end of the shaft 32, when the implement is in operation, will depend upon the particular pair of toothed pinions which is mounted on the splined ends of the two shafts that are accessible in the change-speed gear 31 and on the arrangement of those two pinions that is employed, it being noted that the two pinions of any particular pair are interchangeable on the shaft ends. When the implement is in operation, drive is applied to the forwardly projecting splined or otherwise keyed end of the rotary input shaft 32 of the gear box 30 by a telescopic transmission shaft 33, which is of a construction that is known per se having universal joints at its opposite ends. The leading end of the telescopic transmission shaft 33 is, of course, connected to the rear power take-off shaft of the agricultural tractor or other vehicle which moves and operates the implement.

In the use of the soil cultivating implement (rotary harrow) that has been described with reference to Figures 1 to 4 of the accompanying drawings, its coupling member or trestle 21 is connected to the three- point lifting device or hitch at the rear of an agricultural tractor or other operating vehicle and the telescopic transmission shaft 33 is employed to place the rotary input shaft 32 of the gear box 30 in driven connection with the rear power take-off shaft of the same agricultural tractor or other operating vehicle. Adjustments that may, if required, be made before work commences include altering the transmission ratio in the change-speed gear 31 in the manner described above and using the adjustment mechanism 25 to increase the maximum depth of penetration of the tines 6 into the soil which is possible. These adjustments will usually be made having regard to the nature and condition of the soil that is to be cultivated by the implement. As the implement moves forwardly in the direction A over soil that is to be cultivated, each rotary soil working member 4 works a corresponding strip of soil that extends in the direction A and, since the distance between the tines 6 of each member 4 is a little greater than is the distance between the longitudinal axes (axes of rotation) of immediately neighbouring shaft 3, said strips of soil overlap one another to produce a single broad strip of worked soil which, in the case of the implement that is being described by way of example, will have a width of substantially, although not necessarily exactly, three metres. It is the position of the axis of rotation of the rear-mounted ground roller 18 relative to the rotary soil working members 4 that primarily determines the maximum depth to which the tines 6 of the members 4 can penetrate into the ground and the form of connection of the roller 18 to the frame portion 1 that has been described enables a very fine adjustment easily to be made either from the driving seat of the tractor by way of the crank handle 28 or, when the implement is at rest, from behind the roller 18 by way of the crank handle 29 and it is noted that any selected adjustment setting is maintained in a very stable manner whilst the implement is in operation, this being most important when, for example, the implement is being used to prepare a seed bed. The arms 13 are very resistant to torsional deformation and extend forwardly over the top of the hollow frame portion 1 whilst fitting closely between the corresponding pairs of inner and outer upright supports 9 and 10. This arrangement enables any desired depth setting to be chosen and maintained in a stable manner without there being any significant tendency for one end of the roller 18 to be at a different level, relative to the frame portion 1, as compared with the opposite end thereof.

Figure 4 of the drawings illustrates the provision, on an upper rear portion of each outer upright support 10, of a numbered dial 34. It will be appreciated that, when the arms 13 are adjusted upwardly or downwardly about the substantially horizontal axis designed by the aligned pivot pins 11, the tops of said arms 13 will move along the dials 34 thus acting as pointers which co-operate with those dials. The dials 34 are visible from the driving seat of the agricultural tractor or other moving and operating vehicle and are useful in eabling a correct depth setting to be arrived at both quickly and easily. In particular, it is only necessary to make of note of the dial marking which corresponds to a particular depth setting to enable exactly that same depth setting to be reestablished after a cultivating operation has been discontinued overnight or for some other reason.

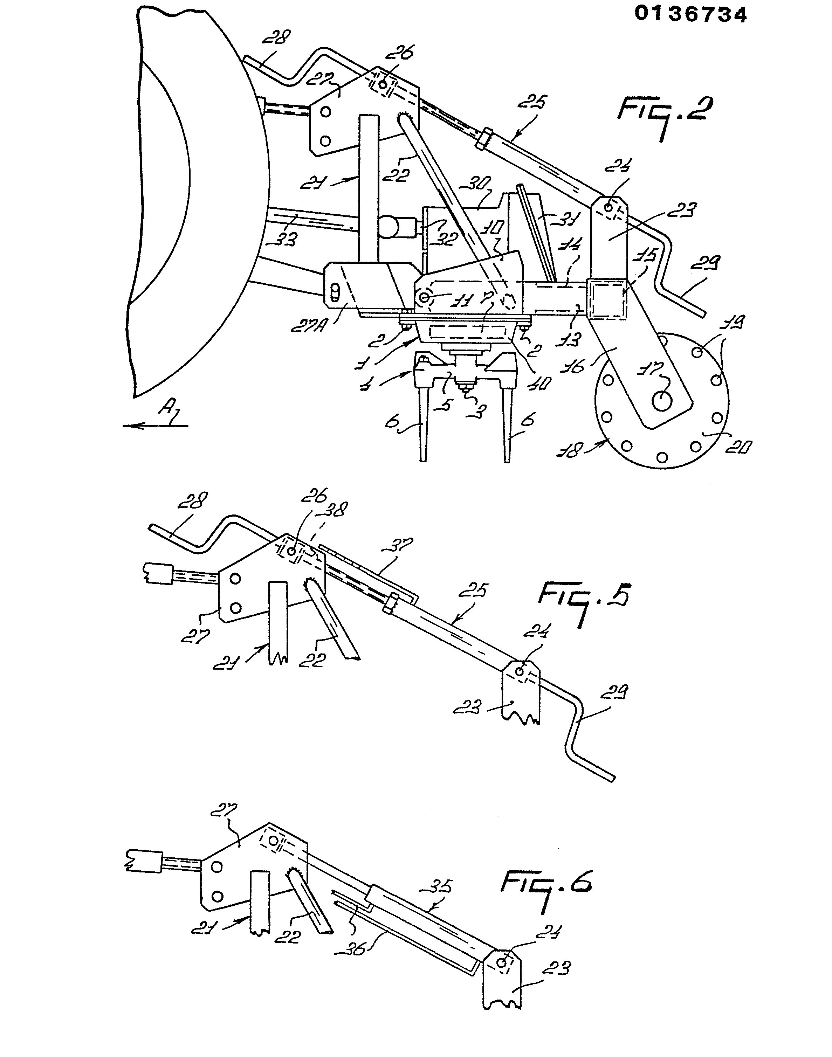

Figure 5 of the drawings illustrates an alternative form of adjustment indicator which may be employed in place of the adjustment indicator which comprises the dials 34. In the embodiment of Figure 5, the non-rotary cylinder of the adjustment mechanism 25 carries, towards its upper end, a dial strip 37 that projects towards the upper crank handle 28 and that carries a dial comprising a rectilinear scale along which is movable a pointer 38. The construction and arrangement of the pointer 38 is not shown in detail in Figure 5 but it may comprise a sleeve fixedly connected around the upper rod of the adjustment. It will be appreciated that, once again, the dial 37 and the co-operating pointer 38 can be seen from the driving seat of an agricultural tractor which moves and operates the implement.

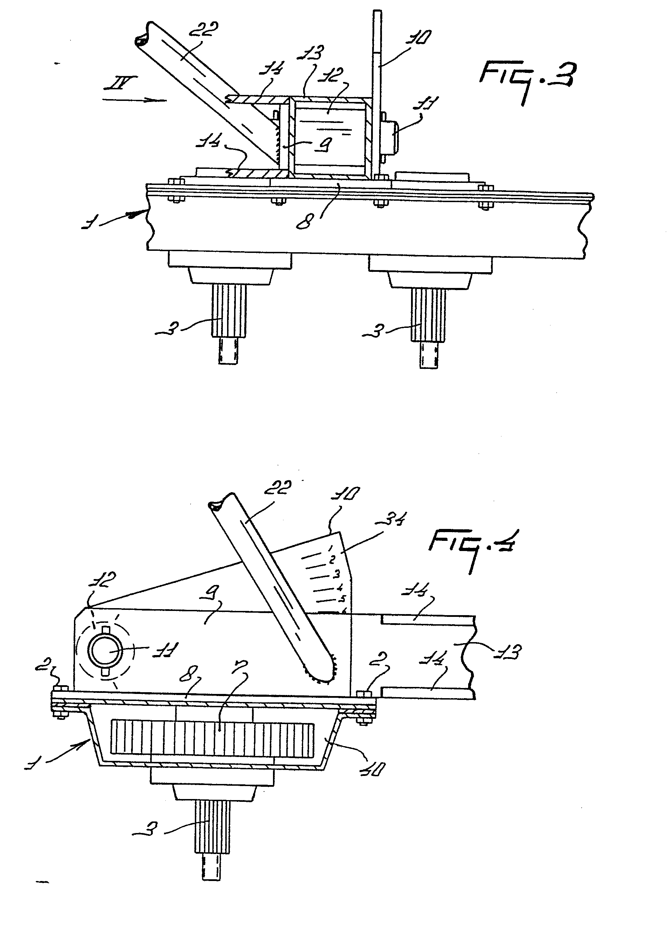

Figure 6 of the drawings illustrates an alternative form of the adjusting machanism in which the mechanism 25 that comprises co-operating screw threads is replaced by a double-acting hydraulic piston and cylinder assembly or ram 35 whose cylinder is turnably mounted between the lugs 23 by the trunnion pins 24 and whose piston rod has its .free end  pivotally mounted between the lugs 27 by a substantially horizontal pin which defines an axis that is parallel or substantially parallel to the transverse length of the hollow frame portion 1.  Flexible hydraulic ducts 36 connect the opposite ends of the cylinder of the ram 35 to the hydraulic system of the co-opertaing tractor or other vehicle by way of quickly releasable self-sealing couplings of known construction and it will be apparent  that the effective length of the mechanism  or ram 35 can be increased, or decreased, as desired, merely by supplying hydraulic pressure medium to an appropriate end of the cylinder of the mechanism 35 and then maintaining any chosen setting, as long as may be desired, by an appropriate manipulation of the controls forming part of the hydraulic system of the co-operating tractor or other vehicle.

Since the arms 13 which connect the carrier 15 of the roller 18 to the frame portion 1 are located well inwardly towards the centre of the implement from its opposite lateral sides, it is not necessary that the ends of the elongate hollow frame portion 1, which constitutes a gear box of the implement, should be constructed with a high level of resistance to torsional deformation for themselves, and for roller-supporting arms which they would otherwise carry, in mind.  Such known implements usually employ welded end plates for co-operation with the roller-supporting arms but this is not necessary in the present case and the manufacture of the hollow frame portion 1, in particular, is thus simplified and rendered less expensive, the previously mentioned simple upright plates 40 (Figure 2) being entirely adequate to close the ends of the hollow frame portion 1.  It will be noted that the two pivot pins 11 that define the substantially horizontal axis about which the arms 13 are upwardly and downwardly turnable relative to the frame portion 1 are located quite close to respective ones of the two horizontally spaced apart lower coupling points at which, in use, the lower lifting links of the three-point lifting device or hitch of the tractor or other operating vehicle are releasably coupled to the frame portion 1. During operation, reaction forces are transferred between the coupling member or trestle 21 and a support 39 (Figure 1) of the roller 18 without the frame portion 1 itself having to have a very high resistance to bending and/or torsional deformation. The support 39 comprises the arms 13, the strengthening plates 14 and the roller carrier 15. The described construction enables the implement to operate in a very stable manner whilst being resistant to damage by forces to which it is subject directly, or _via_ the operating tractor or other vehicle, as a result of soil undulations, stones, buried roots and the like.

- 13 -                    0136734

Claims :

1.        A soil cultivating implement comprising a plurality
of soil working members (4) and a ground roller (18) that is
bodily movable upwardly and downwardly relative to said soil
working members (4) to control the maximum soil working depth
thereof, charcterized in that a dial (34, 37, 38) is provided
for visually setting the bodily level of the roller (18)
relative to that of the soil working members (4), said dial
(34, 37, 38) being so positioned as to be visible from the
driving seat of a tractor which is employed to move and operate
the implement during the use thereof.

2.        An implement according to claim 1, whereby the
ground roller by means of an upright support(10)and an arm
or part (13) of a roller support (39) is movable upwardly and
downwardly, characterized in that the dial (34) is arranged
on one of the upright supports (10), and in that the arm or
part (13) of the roller support (39) is movable upwardly and
downwardly alongside the dial (34) to function as a pointer
in cooperation therewith.

3.        An implement according to claim 2, characterized
in that an adjusting mechanism (25) is provided for controlling
the level of the axis of rotation of the groundroller (18)
and the adjument mechanism (25) carries the dial and its co-
opeating pointer (37, 38) for visually indicating the level
of the axis of rotation of the roller (18) relative to that
of the gear box (1) and/or the soil working members (4).

4.        An implement according to claim 1 or 2, characterized in that an adjusting mechanism (35, 36) is provided for
controlling the level of the axis of rotation of the ground
roller (18) relative to that of the gear box (1) and/or the
soil working members (4), said adjustment mechanism (35, 36)
comprising a double-acting hydraulic piston and cylinder
assemble or ram (35).

FIG.1

0136734

FIG.2

FIG.5

FIG.6

0136734

FIG.3

FIG.4